# EUROPÄISCHE PATENTSCHRIFT

(11) **EP 3 155 269 B1**
(45) Veröffentlichungstag und Bekanntmachung des Hinweises auf die Patenterteilung: **04.03.2020**
(21) Anmeldenummer: 15744106.4
(22) Anmeldetag: 12.06.2015
(51) Int. Cl.: F15B 15/28, F16D 25/12, F16D 25/08

(54) **SENSORAUFNAHME FÜR EINEN HYDRAULISCHEN ZYLINDER UND VERFAHREN ZUM FIXIEREN EINES SENSORS**
SENSOR HOLDER FOR A HYDRAULIC CYLINDER AND METHOD FOR FASTENING A SENSOR
LOGEMENT DE CAPTEUR POUR CYLINDRE HYDRAULIQUE ET PROCÉDÉ DE FIXATION D'UN CAPTEUR

(30) Priorität: 16.06.2014 DE 102014211427
(43) Veröffentlichungstag der Anmeldung: 19.04.2017
(73) Patentinhaber: Schaeffler Technologies AG & Co. KG, 91074 Herzogenaurach (DE)
(72) Erfinder: DUBAS, Richard, F-45170 Neuville aux Bois (FR); BALAH, Kevin, F-45410 Artenay (FR)
(86) Internationale Anmeldenummer: PCT/DE2015/200358
(87) Internationale Veröffentlichungsnummer: WO 2015/192845

(56) Entgegenhaltungen:
- EP-A2- 1 391 615
- DE-A1- 10 242 266
- DE-A1-102009 011 806
- DE-U1- 20 315 735

## Beschreibung

Die vorliegende Erfindung betrifft eine Sensoraufnahme, die ein vereinfachtes Fixieren eines Sensors an einem Hydraulikzylinder, insbesondere an einem Geberzylinder, ermöglicht. Die vorliegende Erfindung betrifft ferner ein Verfahren zum Fixieren eines Sensors an einem hydraulischen Zylinder, wie insbesondere an einem Geberzylinder.

Es sind Geberzylinder, beispielsweise für eine hydraulisch betätigte Kupplung eines Fahrzeugs, mit einer in einem Gehäuse angeordneten Führungshülse bekannt, die einen Abschnitt eines Zylinders bildet, in welchem ein über eine Kolbenstange mit einem manuell zu betätigenden Pedal oder mit einem elektromagnetisch oder hydraulisch betätigten Aktor verbundener Kolben axial verschiebbar geführt ist. Dabei kann es beispielsweise für ein Steuern des Geberzylinders notwendig sein, die Position des Zylinders in der Führungshülse zu bestimmen.

Hierzu ist es bekannt, dass der Geberzylinder einen Weg- oder Positionssensor aufweist, und ferner an dem verschiebbar geführten Kolben ein auch als Target bezeichnetes von dem Sensor detektierbares Element angeordnet ist. Auf diese Weise lässt sich einfach die Position des Targets und dadurch die Stellung des Kolbens in dem Zylinder ermitteln. Dadurch kann bei einem Einsatz in einem hydraulischen Kupplungssystem, beispielsweise, ein besonders komfortabler Kupplungsvorgang ermöglicht werden.

Die Druckschrift DE 10 2009 011 806 A1 offenbart eine Verbindung zwischen einem Sensorgehäuse und einem Hydraulikzylinder, wobei der Hydraulikzylinder Formelemente aufweist, die in Ausnehmungen des Sensorgehäuses eingreifbar und mit dem Sensorgehäuse dauerhaft verbindbar sind.

Dabei ist es bekannt, dass an dem hydraulischen Zylinder, beziehungsweise an dem Zylindergehäuse, eine Sensoraufnahme angeordnet ist, die den Sensor an dem Gehäuse fixieren und gleichzeitig elektrisch kontaktieren kann. Oftmals ist jedoch insbesondere der Schritt des Anordnens der Sensoraufnahme an dem Zylinder zum Fixieren des Gehäuses problematisch.

Aus dem Dokument DE 10 2013 215 078 A1 ist eine Kolben-Zylinder-Anordnung bekannt, insbesondere für ein Kupplungsbetätigungssystem in einem Kraftfahrzeug, mit einem Kolben, welcher axial beweglich im Inneren eines Zylinders angeordnet ist, und mit einem induktiven Sensorsystem, umfassend ein am Kolben befestigtes leitfähiges Target und einen Sensor, welcher an dem Zylinder befestigt ist. Dabei ist es vorgesehen, dass das leitfähige Target als Hülse ausgebildet ist, welche über einen annähernd komplementären zylinderförmigen Abschnitt des Kolbens geschoben ist.

Aus dem Dokument DE 10 2013 201 115 A1 ist ferner ein Hydraulikzylinder bekannt, vorzugsweise zur Betätigung einer Reibungskupplung in einem Kraftfahrzeug, mit einem Zylindergehäuse, in welchem ein beweglicher Kolben gelagert ist, wobei an dem Zylindergehäuse ein Sensorgehäuse befestigt ist, in welchem ein die Position des Kolbens erfassender Sensor angeordnet ist.

Hiervon ausgehend ist es die Aufgabe der vorliegenden Erfindung, die aus dem Stand der Technik bekannten Nachteile zumindest teilweise zu überwinden. Es ist insbesondere die Aufgabe der vorliegenden Erfindung, eine Sensoraufnahme und ein Verfahren zum Fixieren eines Sensors zu schaffen, die beziehungsweise das ein Fixieren des Sensors an einem Hydraulikzylindergehäuse vereinfacht.

Die Lösung der Aufgabe erfolgt erfindungsgemäß durch eine Sensoraufnahme mit den Merkmalen des Anspruchs 1. Die Lösung der Aufgabe erfolgt erfindungsgemäß ferner durch ein Verfahren mit den Merkmalen des Anspruchs 8. Bevorzugte Ausgestaltungen der Erfindung sind in den Unteransprüchen angegeben, wobei weitere in der Beschreibung oder den Figuren beschrieben Merkmale einzeln oder in einer beliebigen Kombination ein Gegenstand der Erfindung sein können, wenn sich aus dem Kontext nicht eindeutig das Gegenteil ergibt.

Die erfindungsgemäße Sensoraufnahme dient insbesondere dem Fixieren und elektrischen Kontaktieren eines Sensors an einem ein erstes und ein zweites Positionierelement aufweisenden Hydraulikzylinder, insbesondere an einem Geberzylinder. Dabei weist die Sensoraufnahme einen Grundkörper mit einer Abdeckung zum Aufnehmen des Sensors und mit einem elektrischen Anschluss auf, wobei an der Abdeckung wenigstens ein erstes Positioniermittel und ein zweites Positioniermittel zum Positionieren des Sensors an der Sensoraufnahme und zum Positionieren der Sensoraufnahme an dem Hydraulikzylinder vorgesehen sind. Ferner ist weist das erste Positioniermittel eine Aufnahme zum toleranzfreien Aufnehmen des ersten Positionierelements des Hydraulikzylinders auf und weist das zweite Positioniermittel eine Aufnahme zum zumindest eindimensionalen toleranzausgleichenden Aufnehmen des zweiten Positionierelements des Hydraulikzylinders auf.

Eine derartige Sensoraufnahme weist mit Bezug auf die aus dem Stand der Technik bekannten Lösungen signifikante Vorteile auf, insbesondere bezüglich einer vereinfachten Herstellbarkeit.

Hierzu dient die Sensoraufnahme insbesondere dem Fixieren sowie dem elektrischen Kontaktieren eines an einem hydraulischen Zylinder angeordneten Sensors. Ein derartiger Sensor kann insbesondere ein Wegsensor beziehungsweise ein Positionssensor sein und die Position eines in einem Zylinder angeordneten Kolbens erfassen, wobei der Kolben insbesondere mit einem elektrisch leitfähigen Target verbunden sein beziehungsweise dieses aufweisen kann. Dies kann insbesondere für eine Steuerung des Kolbens in dem Zylinder dienen und somit, für den beispielhaften Fall der Verwendung des Sensors an einem Geberzylinder in einem hydraulischen Kupplungssystem, einer besonders komfortablen Ansteuerung der Kupplung. Ein derartiger Sensor ist aus dem Stand der Technik grundsätzlich bekannt und kann beispielsweise eine PCB Spule umfassen, welche beispielsweise induktiv die Position des Targets erfassen kann. Der Sensor kann dabei beispielsweise an einem Gehäuse des Hydraulikzylinders, wie etwa eines hydraulischen Geberzylinders, angeordnet sein.

Für eine Fixierung des Sensors umfasst die Sensoraufnahme einen Grundkörper mit einer Abdeckung zum Aufnehmen des Sensors und mit einem elektrischen Anschluss zum Anschließen des Sensors an ein elektrisches System, wie etwa an ein Steuersystem, etwa eines Kraftfahrzeugs und damit zum elektrischen Kontaktieren des Sensors. Dies kann beispielsweise notwendig oder vorteilhaft sein, um die von den Sensor gelieferten Daten an eine Steuereinheit weiterzuleiten, um so den Kolben in geeigneter Weise ansteuern zu können.

Die Abdeckung kann dabei beispielsweise als Gehäusebauteil ausgebildet sein, welches in einem montierten Zustand den Sensor abdeckt, beispielsweise aufnimmt, und kann dabei etwa an dem Gehäuse des hydraulischen Zylinders fixierbar sein. Beispielsweise kann der Grundkörper beziehungsweise die Abdeckung an dem Hydraulikzylinder durch einen Schweißprozess fixiert werden. Weiterhin ist der elektrische Anschluss vorgesehen, welcher elektrisch mit dem Sensor verbindbar ist und an welchem ein weiterer elektrischer Anschluss anschließbar ist. Beispielsweise kann der elektrische Anschluss der Sensoraufnahme als Hülse ausgestaltet sein, so dass ein etwa mit einem Steuersystem verbundener elektrischer Strecker in der Hülse fixiert werden kann.

Für eine Positionierung der Sensoraufnahme an dem Hydraulikzylinder, wie etwa an einem Zylindergehäuse des Hydraulikzylinders, und für ein Positionieren des Sensors an der Sensoraufnahme sind an der Abdeckung wenigstens ein erstes Positioniermittel und ein zweites Positioniermittel vorgesehen. Somit dienen das erste und das zweite Positioniermittel dazu, zum einen den Sensor an der Sensoraufnahme zu positionieren und in einem an dem Zylinder befestigten Zustand der Sensoraufnahme zu fixieren, und ferner die mit dem Sensor bestückte Sensoraufnahme an dem Hydraulikzylinder zu positionieren und gegebenenfalls zu fixieren. Somit wird es durch die vorbeschriebene Sensoraufnahme besonders bevorzugt ermöglicht, dass bei einem Versehen eines Hydraulikzylinders mit einem Sensor der Sensor zunächst an der Sensoraufnahme befestigt werden kann und im Anschluss daran die Einheit aus Sensoraufnahme und Sensor an dem Hydraulikzylinder positioniert und fixiert werden kann. Ein derartiges Verfahren erlaubt gegenüber einem Verfahren, wonach der Sensor zunächst an dem Hydraulikzylinder angeordnet und anschließend die Sensoraufnahme fixiert wird, signifikante Vorteile.

So lässt sich ein derartiges Verfahren besonders einfach durchführen, da insbesondere dann, wenn der Sensor zunächst an der Sensoraufnahme positioniert wird, und diese Einheit in einem Schritt an dem Hydraulikzylinder positioniert wird, nur ein Schritt in einer Blindmontage notwendig ist, was die Positioniergenauigkeit erhöhen kann. Dabei ist es insbesondere von Vorteil, wenn eine Blindmontage des Sensors an dem Hydraulikzylinder umgangen werden kann. Somit kann das Herstellungsverfahren vereinfacht werden.

Bei einer vorbeschriebenen Sensoraufnahme ist es ferner vorgesehen, dass das erste Positioniermittel eine Aufnahme zum toleranzfreien Aufnehmen des ersten Positionierelements des Hydraulikzylinders aufweist und dass das zweite Positioniermittel eine Aufnahme zum zumindest eindimensionalen toleranzausgleichenden Aufnehmen des zweiten Positionierelements des Hydraulikzylinders aufweist. Durch diese Ausgestaltung kann eine Montage einer Einheit aufweisend einen an einer Sensoraufnahme positionierten Sensor weiter vereinfacht werden.

So kann es durch diese Ausgestaltung ausgeglichen werden, dass die Positioniermittel der Sensoraufnahme beziehungsweise die Positionierelemente des Hydraulikzylinders oftmals mit einer gewissen Toleranz zueinander gefertigt werden. In anderen Worten kann der Abstand der Positioniermittel der Sensoraufnahme zueinander beziehungsweise kann der Abstand der Positionierelemente des Hydraulikzylinders zueinander bedingt durch Toleranzen begrenzt variieren. Dadurch, dass das erste Positioniermittel eine Aufnahme zum toleranzfreien Aufnehmen des ersten Positionierelements des Hydraulikzylinders aufweist, kann dabei zum Einen die Position der Sensoraufnahme an dem Hydraulikzylinder genau und definiert eingestellt werden, da die Aufnahme mit dem ersten Positionierelement toleranzfrei wechselwirkt. Darüber hinaus kann jedoch dadurch, dass das zweite Positioniermittel der Aufnahme zum zumindest eindimensionalen toleranzausgleichenden Aufnehmen des zweiten Positionierelements des Hydraulikzylindergehäuses ausgebildet ist, ein zumindest eindimensionales Ausgleichen einer Toleranz, beispielsweise eines Abstands der Positionierelemente zueinander, ausgeglichen werden. Somit kann unter einem Toleranzausgleich im Sinne der vorliegenden Erfindung in an sich bekannter Weise verstanden werden ein definiertes Positionieren der einzelnen Elemente, also insbesondere der Sensoraufnahme an dem Hydraulikzylinder, wobei eine gewisse Toleranz, etwa bedingt durch unterschiedliche Bauteile, erlaubt beziehungsweise ausgeglichen wird. Entsprechend wird unter toleranzfrei im Sinne der vorliegenden Erfindung verstanden, dass das Positioniermittel nicht dazu ausgestaltet ist, eine Toleranz gezielt auszugleichen, also keine toleranzausgleichenden Mittel vorgesehen sind, also etwa das Positioniermittel und das Positionierelement, insbesondere die miteinander wechselwirkenden Bereiche, in Form und Größe an einander angepasst sind.

Somit kann durch die Sensoraufnahme ein gewisses Spiel der Bauteile, wie insbesondere der Positionierelemente beziehungsweise der Positioniermittel zueinander ausgeglichen werden, was auch in dem Falle einer Blindmontage ein problemloses Montieren der Sensoraufnahme an dem Hydraulikzylinder erlauben kann.

Zusammenfassend ermöglicht die vorbeschriebene Sensoraufnahme ein besonders einfaches und problemloses Fixieren des Sensors an einem Hydraulikzylinder.

In einer bevorzugten Ausgestaltung kann es vorgesehen sein, dass das erste und das zweite Positioniermittel jeweils einen Zapfen aufweisen, wobei der Zapfen des ersten Positioniermittels die Aufnahme zum toleranzfreien Aufnehmen des ersten Positionierelements aufweist, und wobei der Zapfen des zweiten Positioniermittels die Aufnahme zum zumindest eindimensionalen toleranzausgleichenden Aufnehmen des zweiten Positionierelements aufweist. Insbesondere in dieser Ausgestaltung kann es auf besonderes einfache Weise möglich sein, zum Einen den Sensor definiert an der Sensoraufnahme zu positionieren, und zum Anderen die Einheit aus Sensoraufnahme und Sensor an dem Hydraulikzylinder zu positionieren. Denn die als Zapfen ausgestalteten Positioniermittel erlauben es auf einfache Weise, den Sensor an der Sensoraufnahme zu positionieren, da der Sensor lediglich Aussparungen aufweisen braucht, die die Zapfen umgreifen. Diese Ausgestaltung kann dabei insbesondere dann von Vorteil sein, wenn der Sensor beispielsweise eine PCB-Spule aufweist. Denn in diesem Fall ist es für eine große Messgenauigkeit des Sensors von Vorteil, wenn die Spule eine geringst mögliche Einschränkung erfährt, was durch kleine Aussparungen problemlos realisierbar sein kann. Darüber hinaus können die Positioniermittel als einfache Positionierstifte ausgebildet werden, die in die entsprechenden Aufnahmen eingreifen.

In einer weiteren bevorzugten Ausgestaltung kann der Zapfen des ersten Positioniermittels zumindest teilweise einen kreiszylindrischen Querschnitt mit einer kreiszylindrischen Aufnahmeöffnung der Aufnahme aufweisen, und kann der Zapfen des zweiten Positioniermittel zumindest teilweise einen elliptischen Querschnitt aufweisen, in dem eine als Nut ausgestaltete Aufnahmeöffnung der Aufnahme angeordnet ist. In dieser Ausgestaltung kann der Sensor zum einen besonders definiert in der Sensoraufnahme positionierbar sein und kann weiterhin auf einfache Weise eine Nut für einen Toleranzausgleich verwendet sein. Dabei kann der Sensor beispielsweise eine kreisförmige Aussparung für ein Wechselwirken mit dem ersten Positioniermittel aufweisen, und kann der Sensor ferner ein Langloch als Aussparung aufweisen, um mit dem zweiten Positioniermittel der Sensoraufnahme zu wechselwirken. Insbesondere in dieser Ausgestaltung kann der Sensor nur geringfügig verändert werden, so dass ein Spulenbereich des Sensors, beispielsweise, keine wesentliche Verkleinerung erfährt und damit einhergehend die Messgenauigkeit stabil bleibt. Darüber hinaus können die Positionierelemente des Hydraulikzylinders auf einfache Weise als etwa zylindrische Positionierstifte ausgestaltet sein, welche in die entsprechenden Aufnahmen der Positioniermittel eingreifen. Dabei kann eine Nut auf einfache Weise eine Toleranz insbesondere in der Position eines Positionierstiftes als Positionierelement des Hydraulikzylinders realisieren, wohingegen eine etwa kreisförmige Aufnahme ein im Wesentlichen toleranzfreies Aufnehmen ermöglichen kann. Die Nut kann dabei nur teilweise in dem Zapfen angeordnet sein, oder kann den Zapfen ganz durchlaufen beziehungsweise den Zapfen durchtrennen.

In einer weiteren bevorzugten Ausgestaltung kann an der Sensoraufnahme ein Sensor angeordnet sein und kann der Sensor an einer der Sensoraufnahme entgegengesetzt angeordneten Seite freiliegen. Insbesondere in dieser Ausgestaltung kann dem Rechnung getragen werden, dass eine Anbindung eines Sensors an einen Hydraulikzylinder dann besonders einfach möglich ist, wenn der Sensor zunächst an der Sensoraufnahme positioniert wird und die so entstandene Einheit an dem Hydraulikzylinder positioniert wird. Denn der Sensor ist in dieser Ausgestaltung an der Sensoraufnahme angeordnet, jedoch nicht an dem Hydraulikzylinder, so dass der Sensor an der der Aufnahme entgegengesetzt angeordneten Seite freiliegt.

Insbesondere in dieser Ausgestaltung kann es somit von Vorteil sein, wenn der Sensor, wie dies vorstehend erläutert ist, eine insbesondere kreisrunde erste Aussparung zum Wechselwirken mit dem ersten Positioniermittel und eine zweite insbesondere kreisrunde Aussparung oder eine Aussparung in der Form eines Langlochs zum Wechselwirken mit dem zweiten Positioniermittel aufweist, wobei insbesondere die Größe und Form der Aussparungen insbesondere an die Größe und Form der Positioniermittel angepasst sind . Insbesondere in dieser Ausgestaltung kann der Sensor toleranzfrei an der Sensoraufnahme positioniert werden, bei einer Positionierung der Sensoraufnahme an dem Hydraulikzylinder jedoch ein effizienter Toleranzausgleich realisiert werden.

Mit Bezug auf weitere technische Merkmale und Vorteile der vorbeschriebenen Sensoraufnahme wird hiermit explizit auf die nachstehenden Erläuterungen im Zusammenhang mit dem Verfahren, dem hydraulischen System, den Figuren sowie der Figurenbeschreibung verwiesen, und umgekehrt.

Die vorliegende Erfindung betrifft ferner ein hydraulisches System, insbesondere ein hydraulisches Kupplungssystem, welches einen Hydraulikzylinder aufweist, an dem ein Sensor durch eine Sensoraufnahme fixiert ist, wie diese vorstehend im Detail beschrieben ist. Dabei kann die die Sensoraufnahme beispielsweise an einem Zylindergehäuse fixiert sein und den Sensor so fixieren und insbesondere elektrisch kontaktieren, wobei die Sensoraufnahme etwa mit dem Zylindergehäuse verschweißt sein kann. Das hydraulische System kann dabei etwa ein hydraulisches Kupplungssystem eines Kraftfahrzeugs sein. Beispielsweise kann das hydraulische System ein Doppelkupplungsgetriebe aufweisen und/oder einen Geberzylinder, einen Nehmerzylinder sowie eine diese verbindende Hydraulikleitung umfassen.

Das hydraulische System, insbesondere aufweisend eine Doppelkupplung, erlaubt zusammenfassend auf einfache und kostengünstige Weise eine vereinfachte Fixierung eines Sensors an einem Hydraulikzylinder mittels der Sensoraufnahme.

Dabei kann es ferner vorgesehen sein, dass das erste und das zweite Positioniermittel jeweils einen Zapfen ausbilden, wobei der Zapfen des ersten Positioniermittels die Aufnahme zum toleranzfreien Aufnehmen des ersten Positionierelements aufweist, wobei die Aufnahme zumindest teilweise einen kreiszylindrischen Querschnitt mit einer kreiszylindrischen Aufnahmeöffnung aufweist und wobei der Zapfen des zweiten Positioniermittels die Aufnahme zum zumindest eindimensionalen toleranzausgleichenden Aufnehmen des zweiten Positionierelements aufweist, wobei der Zapfen des zweiten Positioniermittels zumindest teilweise einen elliptischen Querschnitt aufweist, in dem eine als Nut ausgestaltete Aufnahme angeordnet ist, und dass das erste Positionierelement und das zweite Positionierelement jeweils als insbesondere zylindrischer Positionierstift ausgebildet sind. Insbesondere in dieser Ausgestaltung kann eine besonders einfache Ausgestaltung des ersten und des zweiten Positioniermittels und des ersten und des zweiten Positionierelements erlaubt werden, wobei sowohl eine definierte Anordnung des Sensors an der Sensoraufnahme und einer Anordnung aus Sensor und Sensoraufnahme an dem Hydraulikzylinder ermöglicht werden kann.

Mit Bezug auf weitere technische Merkmale und Vorteile des vorbeschriebenen hydraulischen Systems wird hiermit explizit auf die Erläuterungen im Zusammenhang mit der Sensoraufnahme, dem Verfahren sowie auf die Erläuterungen im Zusammenhang mit den Figuren sowie der Figurenbeschreibung verwiesen, und umgekehrt.

Die vorliegende Erfindung betrifft ferner ein Verfahren zum Fixieren eines Sensors an einem Hydraulikzylinder, insbesondere an einem Geberzylinder, aufweisend die Verfahrensschritte:
a) Bereitstellen einer Sensoraufnahme, wobei die Sensoraufnahme einen Grundkörper mit einer Abdeckung zum Aufnehmen des Sensors und mit einem elektrischen Anschluss umfasst, wobei an der Abdeckung wenigstens ein erstes Positioniermittel und ein zweites Positioniermittel zum Positionieren des Sensors an der Sensoraufnahme und zum Positionieren der Sensoraufnahme an dem Hydraulikzylinder vorgesehen sind, und wobei das erste Positioniermittel eine Aufnahme zum toleranzfreien Aufnehmen des ersten Positionierelements aufweist und das zweite Positioniermittel eine Aufnahme zum zumindest eindimensionalen toleranzausgleichenden Aufnehmen des zweiten Positionierelements aufweist;
b) Anordnen eines Sensors an der Sensoraufnahme derart, dass eine erste Aussparung des Sensors mit dem ersten Positioniermittel wechselwirkt und dass eine zweite Aussparung des Sensors mit dem zweiten Positioniermittel wechselwirkt; und
c) Anordnen der in Verfahrensschritt b) erzeugten Anordnung an einem Hydraulikzylinder.

Insbesondere das vorbeschriebene Verfahren erlaubt zusammenfassend auf einfache und kostengünstige Weise eine vereinfachte Fixierung eines Sensors an einem Hydraulikzylinder mittels der Sensoraufnahme. Dabei kann Verfahrensschritt c) neben einem Anordnen der Anordnung an dem Hydraulikzylinder ferner, etwa als separaten Verfahrensschritt, den Schritt des Fixierens der Sensoraufnahme an dem Hydraulikzylinder aufweisen. Dies kann beispielsweise realisierbar sein, indem die Sensoraufnahme an ein Hydraulikzylindergehäuse geschweißt wird.

Mit Bezug auf weitere technische Merkmale und Vorteile des vorbeschriebenen Verfahrens wird hiermit explizit auf die Erläuterungen im Zusammenhang mit der Sensoraufnahme, dem hydraulischen System, den Figuren sowie der Figurenbeschreibung verwiesen, und umgekehrt.

Im Folgenden wird ein besonders bevorzugtes Ausführungsbeispiel der Erfindung anhand der beiliegenden Zeichnungen erläutert, wobei explizit darauf hingewiesen wird, dass der erfindungsgemäße Gegenstand nicht auf das beschriebene Ausführungsbeispiel beschränkt ist. Dabei werden gleiche oder vergleichbare Bauteile mit den gleichen Bezugszeichen versehen. Es zeigen:
- Fig. 1: eine schematische Darstellung einer Ausgestaltung einer Sensoraufnahme gemäß der Erfindung von schräg oben;
- Fig. 2: eine schematische Darstellung der Ausgestaltung aus Fig. 1 von oben;
- Fig. 3: eine schematische Darstellung einer Ausgestaltung eines Sensors, der mit einer Sensoraufnahme an einem Hydraulikzylinder fixierbar ist;
- Fig. 4: eine Anordnung aus einem an einer Sensoraufnahme positionierten Sensor;
- Fig. 5: eine schematische Schnittansicht der in Fig. 3 gezeigten Anordnung an einem Hydraulikzylindergehäuse von oben; und
- Fig. 6: eine schematische Schnittansicht der Ansicht aus Fig. 5 von der Seite.

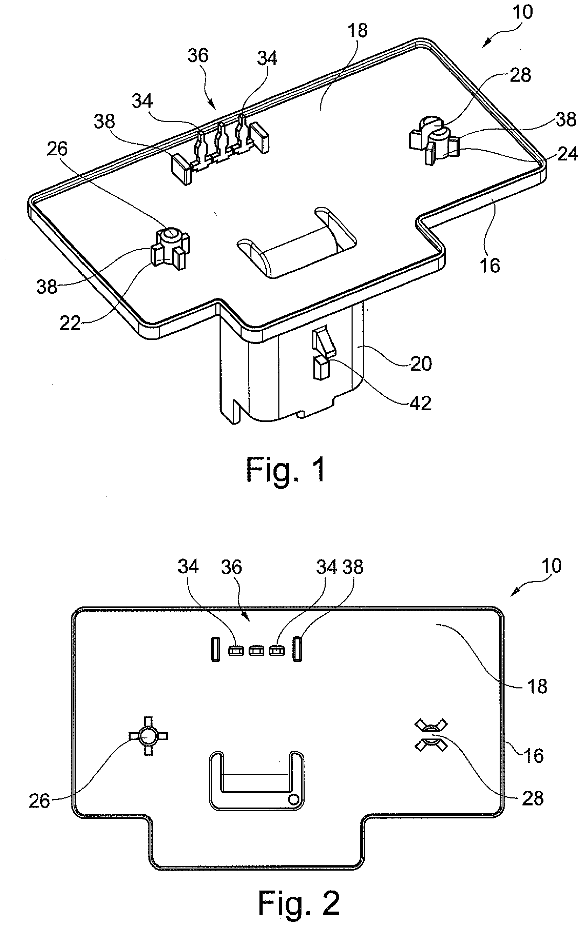

In den Figuren 1 und 2 ist eine Ausgestaltung einer Sensoraufnahme 10 gezeigt. Die Sensoraufnahme 10 dient insbesondere dem Fixieren und dem elektrischen Kontaktieren eines Sensors 12 an einem Hydraulikzylinder, insbesondere an einem Hydraulikzylindergehäuse 14, und kann als solches Bestandteil sein eines hydraulischen Systems, wie etwa eines hydraulischen Kupplungssystems eines Kraftfahrzeugs, sein.

Die Sensoraufnahme 10 weist einen Grundkörper 16 mit einer Abdeckung 18 zum Aufnehmen und insbesondere zum Fixieren des Sensors 12 und mit einem elektrischen Anschluss 20 auf. Der Anschluss 20 kann etwa als Buchse oder wie gemäß Fig. 1 als Stecker ausgebildet sein und dabei etwa Rastmittel 42 für eine Fixierung mit einer Buchse aufweisen. Dabei sind gemäß Fig. 1 an der Abdeckung 18 wenigstens ein erstes Positioniermittel 22 und ein zweites Positioniermittel 24 zum Positionieren des Sensors 12 an der Sensoraufnahme 10 beziehungsweise an der Abdeckung 18 und zum Positionieren der Sensoraufnahme 10 an dem Hydraulikzylinder beziehungsweise Hydraulikzylindergehäuse 14 vorgesehen. Gemäß Fig. 1 und Fig. 2 ist es ferner vorgesehen, dass das erste Positioniermittel 22 eine Aufnahme 26 zum toleranzfreien Aufnehmen eines ersten Positionierelements 30 des Hydraulikzylinders, wie etwa des Hydraulikzylindergehäuses 14, aufweist und dass das zweite Positioniermittel 24 eine Aufnahme 28 zum zumindest eindimensionalen toleranzausgleichenden Aufnehmen eines zweiten Positionierelements 32 des Hydraulikzylinders, wie etwa des Hydraulikzylindergehäuses 14, aufweist.

Dabei weisen das erste 22 und das zweite 22 Positioniermittel jeweils einen Zapfen aus, wobei der Zapfen des ersten Positioniermittels 22 die Aufnahme 26 zum toleranzfreien Aufnehmen des ersten Positionierelements 30 aufweist, und wobei der Zapfen des zweiten Positioniermittels 24 die Aufnahme 28 zum zumindest eindimensionalen toleranzausgleichenden Aufnehmen des zweiten Positionierelements 32 aufweist. Ferner ist es vorgesehen, dass das der Zapfen des ersten Positioniermittels 22 zumindest teilweise einen kreiszylindrischen Querschnitt mit einer kreiszylindrischen Aufnahmeöffnung als Aufnahme 26 aufweist, und dass der Zapfen des zweiten Positioniermittels 24 zumindest teilweise einen elliptischen Querschnitt aufweist, in dem eine als Nut ausgestaltete Aufnahmeöffnung als Aufnahme 28 angeordnet ist. Um ein leichteres Positionieren des Sensors 12 an der Sensoraufnahme 10 zu ermöglichen, weisen die Zapfen ferner an ihrer Oberseite eine Fase auf.

Es ist ferner eine Kontaktstifte 34 aufweisende Kontaktierung 36 gezeigt, mit welcher der Sensor 12 elektrisch kontaktiert werden kann. Die Kontaktierung 36 verläuft nicht gezeigt in den elektrischen Anschluss 20 und kann so mit einer elektrischen Buchse, etwa eines Steuersystems, verbunden werden. Ferner an den Positioniermitteln 22, 24 und an der Kontaktierung 36 Auflagen 38 vorgesehen, um den Sensor 12 abzustützen.

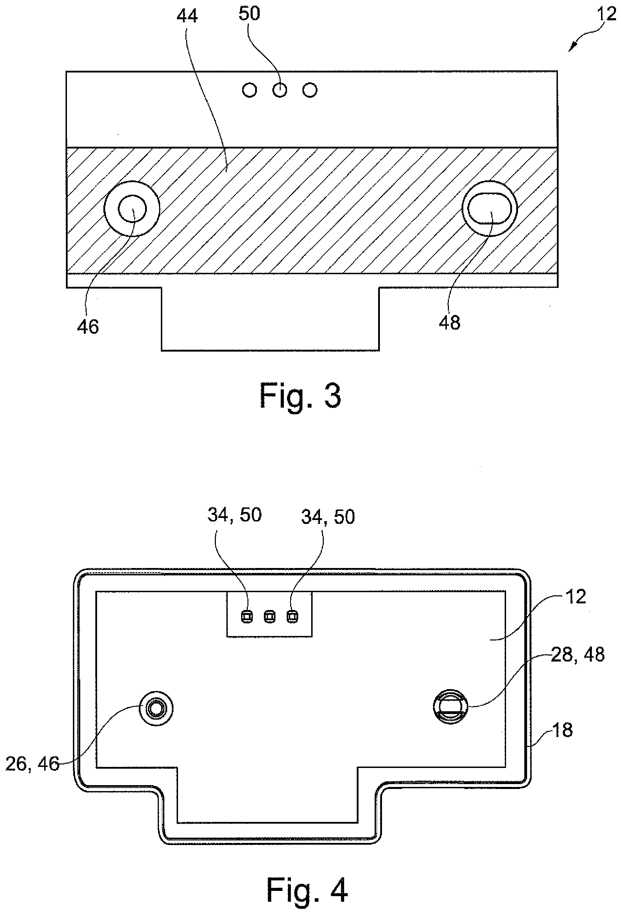

In der Figur 3 ist ein Sensor 12 gezeigt, der an einer Sensoraufnahme 10 positioniert beziehungsweise fixiert werden kann. Dabei basiert der Sensor 12 insbesondere auf einer PCB-Spulenanordnung 44. Im Detail weist der Sensor 12 ein kreisförmige Aussparung 46 und eine Aussparung 48 in der Form eines Langlochs auf, um so mit den Positioniermitteln 22, 24 wechselwirken zu können, wie dies in stark vereinfachter Form des Sensors 12 in der Figur 4 gezeigt ist. Ferner sind Kontaktaufnahmen 50 gezeigt, welche die Kontaktstifte 34 aufnehmen können. In der Figur 4 ist dabei eine Anordnung gezeigt, bei der der Sensor 12 an der Sensoraufnahme 10 angeordnet ist und der Sensor 12 an einer der Sensoraufnahme 10 entgegengesetzt angeordneten Seite freiliegt.

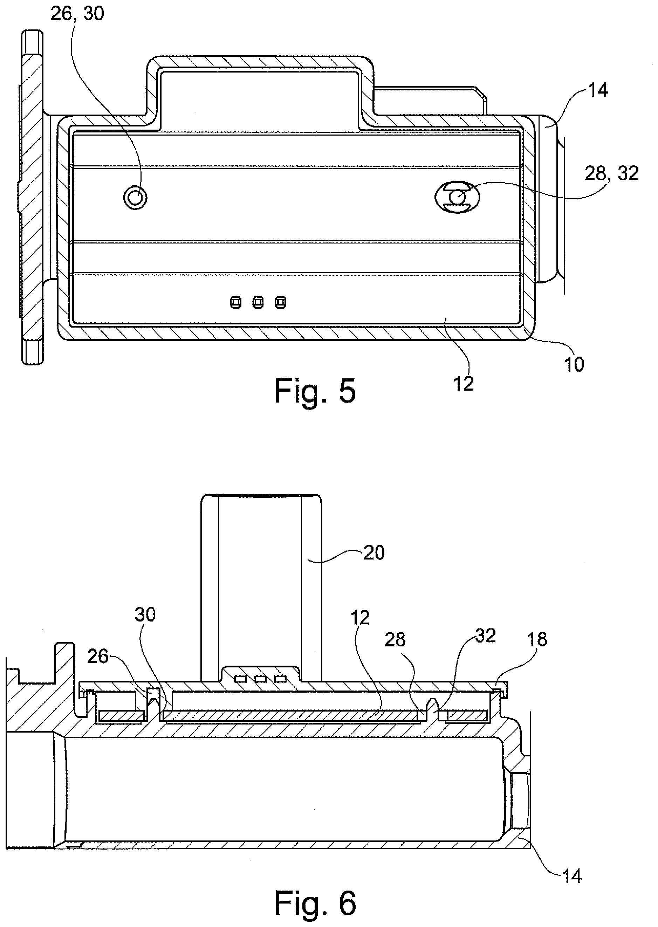

In der Figur 5 ist eine Schnittansicht einer Anordnung gezeigt, in der der Sensor 12 gemeinsam mit der Sensoraufnahme 10 an dem Hydraulikzylindergehäuse 14 angeordnet ist und wobei von der Sensoraufnahme 10 lediglich die Positioniermittel 22, 24 mit den Aufnahmen 26, 28 gezeigt sind. Dabei ist zu erkennen, dass an dem Hydraulikzylindergehäuse 14 das erste Positionierelement 30 und das zweites Positionierelement 32 vorgesehen sind, die jeweils als zylindrischer Positionierstift ausgebildet sind. Dabei ist zu erkennen, dass das erste Positionierelement 30 von der ersten Aufnahme 26 im Wesentlichen toleranzfrei aufgenommen wird, wohingegen das zweite Positionierelement 32 von der zweiten Aufnahme 28 mit einem Toleranzausgleich aufgenommen wird, indem die Aufnahme 28 als Nut ausgestaltet ist.

Der Toleranzausgleich ist ferner in der Figur 6 zu erkennen, wobei insbesondere gezeigt ist, dass das zweite Positioniermittel 32 mit Spiel in der Aufnahme 28 aufgenommen ist.

### Bezugszeichenliste

- 10: Sensoraufnahme
- 12: Sensor
- 14: Hydraulikzylindergehäuse
- 16: Grundkörper
- 18: Abdeckung
- 20: elektrischer Anschluss
- 22: erstes Positioniermittel
- 24: zweites Positioniermittel
- 26: Aufnahme
- 28: Aufnahme
- 30: erstes Positionierelement
- 32: zweites Positionierelement
- 34: Kontaktstift
- 36: Kontaktierung
- 38: Auflage
- 42: Rastmittel
- 44: Spulenanordnung
- 46: Aussparung
- 48: Aussparung
- 50: Kontaktaufnahme

## Patentansprüche

1. Sensoraufnahme zum Fixieren und elektrischen Kontaktieren eines Sensors (12) an einem ein erstes Positionierelement (30) und ein zweites Positionierelement (32) aufweisenden Hydraulikzylinder, insbesondere an einem Geberzylinder, wobei die Sensoraufnahme (10) einen Grundkörper (16) mit einer Abdeckung (18) zum Aufnehmen des Sensors (12) und mit einem elektrischen Anschluss (20) umfasst, wobei an der Abdeckung (18) wenigstens ein erstes Positioniermittel (22) und ein zweites Positioniermittel (24) zum Positionieren des Sensors (12) an der Sensoraufnahme (10) und zum Positionieren der Sensoraufnahme (10) an dem Hydraulikzylinder vorgesehen sind, **dadurch gekennzeichnet, dass** das erste Positioniermittel (22) eine Aufnahme (26) zum toleranzfreien Aufnehmen des ersten Positionierelements (30) aufweist, und dass das zweite Positioniermittel (24) eine Aufnahme (28) zum zumindest eindimensionalen toleranzausgleichenden Aufnehmen des zweiten Positionierelements (32) aufweist.

2. Sensoraufnahme nach Anspruch 1, **dadurch gekennzeichnet, dass** das erste Positioniermittel (22) und das zweite Positioniermittel (24) jeweils einen Zapfen aufweisen, wobei der Zapfen des ersten Positioniermittels (22) die Aufnahme (26) zum toleranzfreien Aufnehmen des ersten Positionierelements (30) aufweist, und wobei der Zapfen des zweiten Positioniermittels (24) die Aufnahme zum zumindest eindimensionalen toleranzausgleichenden Aufnehmen des zweiten Positionierelements (32) aufweist.

3. Sensoraufnahme nach Anspruch 2, **dadurch gekennzeichnet, dass** der Zapfen des ersten Positioniermittels (22) zumindest teilweise einen kreiszylindrischen Querschnitt mit einer kreiszylindrischen Aufnahmeöffnung aufweist, und dass der Zapfen des zweiten Positioniermittels (24) zumindest teilweise einen elliptischen Querschnitt aufweist, in dem eine als Nut ausgestaltete Aufnahmeöffnung angeordnet ist.

4. Sensoraufnahme nach einem der Ansprüche 1 bis 3, **dadurch gekennzeichnet, dass** an der Sensoraufnahme (10) ein Sensor (12) angeordnet ist und dass der Sensor (12) an einer der Sensoraufnahme (10) entgegengesetzt angeordneten Seite freiliegt.

5. Sensoraufnahme nach Anspruch 4, **dadurch gekennzeichnet, dass** der Sensor (12) eine insbesondere kreisrunde erste Aussparung (46) zum Wechselwirken mit dem ersten Positioniermittel (22) und eine zweite Aussparung (48) in der Form eines Langlochs zum Wechselwirken mit dem zweiten Positioniermittel (24) aufweist.

6. Hydraulisches System, insbesondere hydraulisches Kupplungssystem, **dadurch gekennzeichnet, dass** das hydraulische System einen Hydraulikzylinder aufweist, an dem ein Sensor (12) durch eine Sensoraufnahme (10) nach einem der Ansprüche 1 bis 6 fixiert ist.

7. Hydraulisches System, insbesondere hydraulisches Kupplungssystem, mit einer Sensoraufnahme (10) nach Anspruch 1 zum Fixieren und elektrischen Kontaktieren eines Sensors (12, **dadurch gekennzeichnet, dass** das erste Positioniermittel (22) und das zweite Positioniermittel (24) jeweils einen Zapfen aufweisen, wobei der Zapfen des ersten Positioniermittels (22) eine Aufnahme (26) zum toleranzfreien Aufnehmen des ersten Positionierelements (30) aufweist, wobei die Aufnahme (26) zumindest teilweise einen kreiszylindrischen Querschnitt mit einer kreiszylindrischen Aufnahmeöffnung aufweist, und wobei der Zapfen des zweiten Positioniermittels (24) eine Aufnahme (28) zum zumindest eindimensionalen toleranzausgleichenden Aufnehmen des zweiten Positionierelements (32) aufweist, wobei der Zapfen des zweiten Positioniermittels (24) zumindest teilweise einen elliptischen Querschnitt aufweist, in dem eine als Nut ausgestaltete Aufnahmeöffnung angeordnet ist, und dass das erste Positionierelement (30) und das zweite Positionierelement (32) jeweils als insbesondere zylindrischer Positionierstift ausgebildet sind.

8. Verfahren zum Fixieren eines Sensors (12) an einem Hydraulikzylinder, insbesondere an einem Geberzylinder, aufweisend die Verfahrensschritte:
a) Bereitstellen einer Sensoraufnahme, wobei die Sensoraufnahme (10) einen Grundkörper (16) mit einer Abdeckung (18) zum Aufnehmen des Sensors (12) und mit einem elektrischen Anschluss (20) umfasst, wobei an der Abdeckung (18) wenigstens ein erstes Positioniermittel (22) und ein zweites Positioniermittel (24) zum Positionieren des Sensors (12) an der Sensoraufnahme (10) und zum Positionieren der Sensoraufnahme (10) an dem Hydraulikzylinder vorgesehen sind, und wobei das erste Positioniermittel (22) eine Aufnahme (26) zum toleranzfreien Aufnehmen des ersten Positionierelements (30) aufweist, und das zweite Positioniermittel (24) eine Aufnahme (28) zum zumindest eindimensionalen toleranzausgleichenden Aufnehmen des zweiten Positionierelements (32) aufweist;
b) Anordnen eines Sensors (12) an der Sensoraufnahme (10) derart, dass eine erste Aussparung (46) des Sensors (12) mit dem ersten Positioniermittel (22) wechselwirkt und dass eine zweite Aussparung (48) des Sensors (12) mit dem zweiten Positioniermittel (24) wechselwirkt; und
c) Anordnen der in Verfahrensschritt b) erzeugten Anordnung an einem Hydraulikzylinder.

## Claims

1. Sensor holder for fixing and making electric contact with a sensor (12) on a hydraulic cylinder which has a first positioning element (30) and a second positioning element (32), in particular on a master cylinder, the sensor holder (10) comprising a main body (16) with a covering (18) for holding the sensor (12) and with an electric connector (20), at least one first positioning means (22) and one second positioning means (24) for positioning the sensor (12) on the sensor holder (10) and for positioning the sensor holder (10) on the hydraulic cylinder being provided on the covering (18), **characterized in that** the first positioning means (22) has a holder (26) for holding the first positioning element (30) in a tolerance-free manner, and **in that** the second positioning means (24) has a holder (28) for holding the second positioning element (32) in an at least one-dimensional and tolerance-compensating manner.

2. Sensor holder according to Claim 1, **characterized in that** the first positioning means (22) and the second positioning means (24) in each case have a pin, the pin of the first positioning means (22) having the holder (26) for holding the first positioning element (30) in a tolerance-free manner, and the pin of the second positioning means (24) having the holder for holding the second positioning element (32) in an at least one-dimensional and tolerance-compensating manner.

3. Sensor holder according to Claim 2, **characterized in that** the pin of the first positioning means (22) at least partially has a circular-cylindrical cross section with a circular-cylindrical holder opening, and **in that** the pin of the second positioning means (24) at least partially has an elliptical cross section, in which a holder opening which is configured as a groove is arranged.

4. Sensor holder according to one of Claims 1 to 3, **characterized in that** a sensor (12) is arranged on the sensor holder (10), and **in that** the sensor (12) is exposed on a side which is arranged in an opposed manner with respect to the sensor holder (10).

5. Sensor holder according to Claim 4, **characterized in that** the sensor (12) has a first cut-out (46) which is, in particular, circular for interacting with the first positioning means (22), and a second cut-out (48) in the form of a slot for interacting with the second positioning means (24).

6. Hydraulic system, in particular hydraulic clutch system, **characterized in that** the hydraulic system has a hydraulic cylinder, on which a sensor (12) is fixed by way of a sensor holder (10) according to one of Claims 1 to 6.

7. Hydraulic system, in particular hydraulic clutch system, having a sensor holder (10) according to Claim 1 for fixing and making electric contact with a sensor (12), **characterized in that** the first positioning means (22) and the second positioning means (24) in each case have a pin, the pin of the first positioning means (22) having a holder (26) for holding the first positioning element (30) in a tolerance-free manner, the holder (26) at least partially having a circular-cylindrical cross section with a circular-cylindrical holder opening, and the pin of the second positioning means (24) having a holder (28) for holding the second positioning element (32) in an at least one-dimensional and tolerance-compensating manner, the pin of the second positioning means (24) at least partially having an elliptical cross section, in which a holder opening which is configured as a groove is arranged, and **in that** the first positioning element (30) and the second positioning element (32) are configured in each case as a positioning pin which is, in particular, cylindrical.

8. Method for fixing a sensor (12) on a hydraulic cylinder, in particular on a master cylinder, having the method steps:
a) providing of a sensor holder, the sensor holder (10) comprising a main body (16) with a covering (18) for holding the sensor (12) and with an electric connector (20), at least one first positioning means (22) and one second positioning means (24) for positioning the sensor (12) on the sensor holder (10) and for positioning the sensor holder (10) on the hydraulic cylinder being provided on the covering (18), and the first positioning means (22) having a holder (26) for holding the first positioning element (30) in a tolerance-free manner, and the second positioning means (24) having a holder (28) for holding the second positioning element (32) in an at least one-dimensional and tolerance-compensating manner;
b) arranging of a sensor (12) on the sensor holder (10) in such a way that a first cut-out (46) of the sensor (12) interacts with the first positioning means (22), and that a second cut-out (48) of the sensor (12) interacts with the second positioning means (24); and
c) arranging of the arrangement which is produced in method step b) on a hydraulic cylinder.

## Revendications

1. Logement de capteur destiné à la fixation et à la mise en contact électrique d'un capteur (12) sur un cylindre hydraulique comportant un premier élément de positionnement (30) et un second élément de positionnement (32), en particulier sur un cylindre émetteur, dans lequel le logement de capteur (10) comprend un corps de base (16) pourvu d'un élément de recouvrement (18) destiné à recevoir le capteur (12) et d'une borne électrique (20), dans lequel au moins un premier moyen de positionnement (22) et un second moyen de positionnement (24) sont prévus sur l'élément de recouvrement (18) pour positionner le capteur (12) sur le logement de capteur (10) et pour positionner le logement en capteur (10) sur le cylindre hydraulique, **caractérisé en ce que** le premier moyen de positionnement (22) comporte un logement (26) destiné à recevoir sans tolérance le premier élément de positionnement (30), et **en ce que** le second moyen de positionnement (24) comporte un logement (28) destiné à recevoir le second élément de positionnement (32) avec compensation de tolérance dans au moins une dimension.

2. Logement de capteur selon la revendication 1, **caractérisé en ce que** le premier moyen de positionnement (22) et le second moyen de positionnement (24) comportent chacun une broche, dans lequel la broche du premier moyen de positionnement (22) comporte le logement (26) destiné à recevoir sans tolérance le premier élément de positionnement (30), et dans lequel la broche du second moyen de positionnement (24) comporte le logement destiné à recevoir le second élément de positionnement (32) avec compensation de tolérance dans au moins une dimension.

3. Logement de capteur selon la revendication 2, **caractérisé en ce que** la broche du premier moyen de positionnement (22) présente au moins partiellement une section cylindrique circulaire avec une ouverture de logement cylindrique circulaire, et **en ce que** la broche du second moyen de positionnement (24) présente au moins partiellement une section transversale elliptique dans laquelle est disposée une ouverture de réception réalisée sous la forme d'une rainure.

4. Logement de capteur selon l'une des revendications 1 à 3, **caractérisé en ce qu'**un capteur (12) est disposé sur le logement de capteur (10) et **en ce que** le capteur (12) est exposé sur un côté disposé en face du logement de capteur (10).

5. Logement de capteur selon la revendication 4, **caractérisé en ce que** le capteur (12) présente un premier évidement (46), en particulier circulaire, destiné à interagir avec le premier moyen de positionnement (22) et un second évidement (48), sous la forme d'un trou oblong, destiné à interagir avec le second moyen de positionnement (24).

6. Système hydraulique, en particulier système d'accouplement hydraulique, **caractérisé en ce que** le système hydraulique comporte un cylindre hydraulique sur lequel un capteur (12) est fixé par un logement de capteur (10) selon l'une des revendications 1 à 6.

7. Système hydraulique, en particulier système d'accouplement hydraulique, comportant un logement de capteur (10) selon la revendication 1 pour la fixation et la mise en contact électrique d'un capteur (12), **caractérisé en ce que** le premier moyen de positionnement (22) et le second moyen de positionnement (24) comportent chacun une broche, dans lequel la broche du premier moyen de positionnement (22) comporte un logement (26) destiné à recevoir sans tolérance le premier élément de positionnement (30), dans lequel le logement (26) présente au moins partiellement une section transversale cylindrique circulaire avec une ouverture de logement cylindrique circulaire, et dans lequel la broche du second moyen de positionnement (24) comporte un logement (28) destiné à recevoir le second élément de positionnement (32) avec compensation de tolérance dans au moins une dimension, dans lequel la broche du second moyen de positionnement (24) présente au moins partiellement une section transversale elliptique dans laquelle est disposée une ouverture de réception sous la forme d'une rainure, et **en ce que** le premier élément de positionnement (30) et le second élément de positionnement (32) sont chacun réalisés sous la forme de broches de positionnement, en particulier cylindriques.

8. Procédé de fixation d'un capteur (12) sur un cylindre hydraulique, en particulier sur un cylindre émetteur, comprenant les étapes de procédé consistant à :
a) prévoir un logement de capteur, dans lequel le logement de capteur (10) comprend un corps de base (16) pourvu d'un élément de recouvrement (18) destiné à recevoir le capteur (12) et d'une borne électrique (20), dans lequel au moins un premier moyen de positionnement (22) et un second moyen de positionnement (24) sont prévus sur l'élément de recouvrement (18) pour positionner le capteur (12) sur le logement de capteur (10) et pour positionner le logement de capteur (10) sur le cylindre hydraulique, et dans lequel le premier moyen de positionnement (22) comporte un logement (26) destiné à recevoir sans tolérance le premier élément de positionnement (30), et le second moyen de positionnement (24) comporte un logement (28) destiné à recevoir le second élément de positionnement (32) avec compensation de tolérance dans au moins une direction ;
b) disposer un capteur (12) sur le logement de capteur (10) de telle manière à ce qu'un premier évidement (46) du capteur (12) interagisse avec le premier moyen de positionnement (22) et qu'un second évidement (48) du capteur (12) interagisse avec le second moyen de positionnement (24) ; et
c) disposer l'agencement réalisé au cours de l'étape b) sur un cylindre hydraulique.
